# EUROPÄISCHE PATENTSCHRIFT

(11) **EP 2 264 335 B1**
(45) Veröffentlichungstag und Bekanntmachung des Hinweises auf die Patenterteilung: **13.04.2016**
(21) Anmeldenummer: 10181550.4
(22) Anmeldetag: 03.05.2006
(51) Int. Cl.: F16H 57/04, F16H 57/02, B60K 1/00, B60K 17/08, B60K 17/16, B60T 1/00

(54) **ANTRIEBSEINHEIT FÜR EIN KRAFTFAHRZEUG**
DRIVE UNIT FOR A VEHICLE
UNITE D'ENTRAINEMENT DESTINEE A UN VEHICULE

(30) Priorität: 13.05.2005 DE 102005022926
(43) Veröffentlichungstag der Anmeldung: 22.12.2010
(62) Teilanmeldung aus: 06753471.9
(73) Patentinhaber: GETRAG Getriebe- und Zahnradfabrik Hermann Hagenmeyer GmbH & Cie KG, 74199 Untergruppenbach (DE)
(72) Erfinder: Knoblauch, Daniel, 74199, Untergruppenbach (DE); Knödel, Ulrich, 74379, Ingersheim (DE); Stammberger, Marc, 75438, Knittlingen (DE)
(74) Vertreter: Witte, Weller & Partner Patentanwälte mbB

(56) Entgegenhaltungen:
- DE-A1- 4 112 843
- DE-A1- 4 305 055
- DE-B- 1 273 914
- GB-A- 270 876
- JP-A- 59 208 265
- JP-U- 48 071 279
- JP-U- 52 103 276
- JP-U- 58 058 138

## Beschreibung

Die vorliegende Erfindung betrifft eine Antriebseinheit für ein Kraftfahrzeug mit einen Radsatz und einem Gehäuse.

Eine derartige Antriebseinheit ist bekannt aus der DE 43 05 055 A1.

Elektrofahrzeuge mit einer elektrischen Antriebseinheit sind seit langem bekannt. Bislang bestand das Ziel bei derartigen Elektrofahrzeugen darin, Emissionen zu vermeiden, wie sie bei einem Verbrennungsmotor auftreten. Derartige Fahrzeuge sind daher vorwiegend unter dem Gesichtspunkt entwickelt worden, im Stadtbetrieb angemessene Fahrleistungen zu erzielen. Die Reichweite ist für längere Fahrten generell unzureichend. Dies liegt auch an dem notwendigen schweren Energiespeicher in Form eines Akkumulators, einer Brennstoffzelle oder Ähnlichem.

Seit einigen Jahren sind auch Hybrid-Antriebe im Einsatz. Hier besteht das Ziel darin, bei bestimmten Fahrsituationen keine Emissionen zu erzeugen, längere Fahrten mit dem Verbrennungsmotor jedoch zu ermöglichen.

Ferner kann bei derartigen Hybrid-Konzepten ein Vorteil daraus gezogen werden, dass die Antriebsmotoren parallel geschaltet (Boost-Betrieb), und dass gegebenenfalls eine Rekuperation erfolgen kann (beispielsweise im Schubbetrieb).

Aus der DE 42 12 324 A1 ist eine Antriebseinheit zum Antrieb eines Stadtautos mittels Elektromotor bekannt. Die Antriebseinheit beinhaltet ein Schaltgetriebe, das zwei Geschwindigkeiten in Vorwärtsrichtung und einen Rückwärtsgang aufweist.

Das Schaltgetriebe weist eine erste Welle auf, die sich aus einem Gehäuse des Getriebes heraus erstreckt und außerhalb des Gehäuses mit dem Elektromotor verbindbar ist. An der ersten Welle sind zwei Ritzel für die zwei Gangstufen festgelegt.

An einer zweiten Welle sind zwei den Ritzeln entsprechende Losräder gelagert, die mittels zweier Kupplungen schaltbar sind. Diese werden so geschaltet, dass jeweils eine der Kupplungen geöffnet und die andere geschlossen ist. Die Neutralstellung wird durch Abschalten des Elektromotors bestimmt.

Ein vom Konzept her ähnlicher Antriebsstrang ist aus der DE 199 17 724 A1 bekannt. Bei diesem Antriebsstrang sind an einer Getriebewelle zwei Losräder gelagert, die jeweils aüßenseitig mit einer zugeordneten Kupplungseinrichtung verbunden sind.

Die Losräder stehen jeweils mit einem Festrad in Eingriff. Die Festräder sind an einem Differentialkorb eines Ausgleichsgetriebes der zugeordneten Achse des Kraftfahrzeuges festgelegt.

Aus der DE 43 05 055 A1 ist eine Achsantriebseinheit für ein Elektromobil bekannt, mit einem Elektromotor, einem Schaltgetriebe, bei dem eine Antriebswelle mit Losrädern versehen ist, die mit Festrädern kämmen und wahlweise mit ihrer Welle kuppelbar sind, und mit einem Ausgleichsgetriebe, dessen Differentialkorb koaxial zu Achsantriebswellen ausgerichtet ist. Um eine möglichst kleine, leichte und billige Antriebseinheit zu schaffen, ist der Differentialkorb selbst die Abtriebswelle des Getriebes, und die Losräder sind mittels einer Schaltmuffe mit der Antriebswelle verbindbar. Die Schaltmuffe bedient dabei eine erste Klauenkupplung zur Verbindung des ersten Losrades mit der Antriebswelle und eine zweite Klauenkupplung zur Verbindung des zweiten Losrades mit der Antriebswelle.

Die Antriebswelle ist über einen Konstanten-Radsatz mit einer Kuppelhülse verbunden, die drehbar in dem Getriebegehäuse gelagert ist. Die Kuppelhülse ist mit einer Motorwelle verbindbar, und zwar durch eine Öffnung in dem Getriebegehäusedeckel hindurch. Das an der Kuppelhülse festgelegte Antriebsritzel des Konstanten-Radsatzes ist in unmittelbarer Nachbarschaft mittels eines ersten Lagers, das an dem Hauptgehäuse festgelegt ist, und eines zweiten Lagers gelagert, das an dem Getriebegehäusedeckel gelagert ist.

Das Ausgleichsgetriebe ist gleichfalls innerhalb des Hauptgehäuseteils gelagert.

An dem Differentialkorb des Ausgleichsgetriebes ist ferner ein Sperrenrad festgelegt, das mittels einer von Hand oder automatisch betätigbaren Klinke zusammenwirken kann, um eine Parksperreneinrichtung zu realisieren.

Die bekannten Antriebseinheiten weisen entweder ein unbefriedigendes Leistungsgewicht, eine unzureichende Getriebeakustik und/oder eine unbefriedigende Fahrdynamik auf.

Aus der DE 4 112 843 A1 ist eine Antriebseinheit mit einem Radsatz bekannt, gemäss dem einleitenden Teil des Anspruchs 1, bei der ein Zahnrad an wenigstens einer axialen Außenseite eine Ausnehmung aufweist, die innenumfänglich eine Ringtasche zur Aufnahme von Schmier- bzw. Kühlfluid bildet und wobei sich von einer Ringtasche wenigstens ein Schmierkanal radial nach außen erstreckt, durch den hindurch während des Betriebs Schmier- bzw. Kühlfluid auf eine Verzahnung des Zahnrades strömt.

Aus der GB 270 876 ist ein Zahnrad für eine Getriebeeinheit bekannt, das an axialen Außenseiten Ausnehmungen aufweist zur Aufnahme von Schmier- bzw. Kühlfluid und wobei sich von den Ausnehmungen wenigstens ein Schmierkanal radial nach außen erstreckt, durch den hindurch während des Betriebs Schmier- bzw. Kühlfluid auf die Verzahnung des Zahnrades strömt und wobei ein separater Fluidkanal in die Ausnehmung des Zahnrades hineinragt, um Schmier- bzw. Kühlfluid in die Ausnehmung zu leiten.

Aus der JP 48071279 U ist ein Zahnrad für eine Antriebseinheit bekannt, das in axialer Richtung eine Ausnehmung aufweist zur Aufnahme von Schmier bzw. Kühlfluid und wobei der Ausnehmung ein Fluidleitrohr zugeordnet ist, um Schmier- bzw. Kühlfluid in die Ausnehmung zu leiten.

Aus der DE 1 273 914 ist eine Schmiervorrichtung für ein Zahnrad mit horizontaler Drehachse und mit zwei ringförmigen Kammern für das Schmiermittel bekannt, bei der Zuleitungsrohre Schmiermittel an Teilen des Getriebegehäuses aufnehmen und das aufgenommene Schmiermittel der Sammelkammer zuführen.

Demzufolge besteht die Aufgabe der Erfindung darin, eine verbesserte Antriebseinheit für ein Kraftfahrzeug anzugeben.

Diese Aufgabe wird gemäß der vorliegenden Erfindung gelöst durch eine Antriebseinheit mit einem Radsatz und Gehäuse, wobei der Radsatz ein erstes, vorzugsweise antreibendes Zahnrad und ein zweites Zahnrad aufweist, das in axialer Richtung schmaler ausgebildet ist als das erste Zahnrad, und wobei das zweite Zahnrad an wenigstens einer axialen Außenseite eine Ausnehmung aufweist, die innenumfänglich eine Ringtasche zur Aufnahme von Schmier bzw. Kühlfluid aufweist, und wobei sich von der Ringtasche wenigstens ein Schmierkanal radial nach außen erstreckt, durch den hindurch während des Betriebs Schmier- bzw. Kühlfluid auf die Verzahnung des ersten Zahnrades strömt, wobei der Radsatz benachbart zu dem Gehäuse der Antriebseinheit gelagert ist und an dem Gehäuse ein Fluidelement angeordnet ist, wobei das Fluidleitelement unterhalb einer Welle angeordnet ist, an der das zweite Zahnrad gelagert ist und in die Axialausnehmung hineinragt, wobei das Fluidleitelement dazu ausgebildet ist, von oben herunterströmendes Fluid aufzufangen und in axialer Richtung in die Axialausnehmung zu leiten.

Durch diese Maßnahme kann eine besonders effiziente Schmierung bzw. Kühlung des Radsatzes, insbesondere des Konstanten-Radsatzes der erfindungsgemäßen Antriebseinheit ersielt werden.

Von besonderem Vorteil ist es dabei, wenn an der axialen Außenseite des zweiten Zahnrades eine Ringscheibe befestigt ist, die die Ringtasche axial begrenzt, und wobei zwischen der Ringscheibe und der axialen Außenseite ein Ringspalt eingerichtet ist, der den Schmierkanal bildet.

Auf diese Weise kann der Schmierkanal ohne Schwächung des Radkörpers des zweiten Zahnrades eingerichtet werden.

Es versteht sich, dass hierbei insbesondere von Bedeutung ist, dass die Verzahnung des ersten Zahnrades breiter ausgebildet ist als jene des zweiten Zahnrades.

Ferner ist es vorteilhaft, wenn die Ringscheibe unlösbar mit einem Radkörper des zweiten Zahnrades verbunden ist, vorzugsweise durch ein oder mehrere Form- oder Stoffschlusselemente wie einen oder mehrere genietete Zapfen.

Auf diese Weise kann die Anordnung aus Radkörper und Ringscheibe als integrale Einheit ausgebildet werden.

Ferner ist vorteilhaft, wenn auf beiden axialen Außenseiten des zweiten Zahnrades eine Ringtasche gebildet ist und wenn die Ringtaschen durch wenigstens einen axialen Verbindungskanal miteinander in Verbindung stehen. Je nach Gestaltung des Radkörpers kann es vorteilhaft sein, den Verbindungskanal leicht nach außen geneigt auszuführen.

Hierbei kann erreicht werden, dass auf beiden axialen Außenseiten ein Schmierkanal gebildet wird, um so die Schmiereffizienz zu erhöhen.

Die oben genannte Aufgabe wird ferner gelöst durch eine Antriebseinheit mit einem Radsatz gemäß der vorliegenden Erfindung.

Durch diese Maßnahme kann eine kompakte und integrale Bauweise der Antriebseinheit erzielt werden.

Von besonderem Vorteil ist es, wenn das Gehäuse bzw. der Gehäuseabschnitt, an dem der Antriebsmotor und das Wechselgetriebe gelagert bzw. aufgenommen sind, einstückig ausgebildet ist.

Weiterhin ist es vorteilhaft, wenn in dem Gehäuse ferner ein Ausgleichsgetriebe aufgenommen ist, das ein Eingangsglied, wie einen Differentialkorb, aufweist, das mit dem Wechselgetriebe verbunden ist.

Von besonderem Vorzug ist es, wenn das gemeinsame Gehäuse eine Trennwand aufweist, durch die hindurch eine Motorwelle des Antriebsmotors oder eine hiermit verbundene Antriebswelle hin zu dem Wechselgetriebe geführt ist.

Das gemeinsame Gehäuse bzw. der gemeinsame Gehäuseabschnitt, an dem sowohl der Antriebsmotor als auch das Wechselgetriebe gelagert sind, weist folglich eine vorzugsweise einstückig damit ausgebildete Trennwand auf, so dass eine gegebenenfalls vorgesehene Abdichtung zwischen dem Antriebsmotor und dem Wechselgetriebe einfach zu realisieren ist.

Hierbei ist es ferner vorteilhaft, wenn eine Gehäusebasis einen an einer Seite offenen, mittels eines ersten Deckels verschlossenen Motorraum zur Aufnahme des Antriebsmotors sowie einen Getrieberaum zur Aufnahme des Wechselgetriebes und gegebenenfalls des Ausgleichsgetriebes aufweist.

Es versteht sich, dass der Motorraum und der Getrieberaum vorzugsweise durch die Trennwand voneinander getrennt sind.

Der Getrieberaum ist vorzugsweise an der anderen Seite der Getriebebasis ausgebildet und zu der anderen Seite hin offen sowie mittels eines zweiten Deckels verschlossen.

Durch die Ausbildung mit einer Gehäusebasis, an der der Motorraum und der Getrieberaum vorgesehen sind, und zwei vorzugsweise in parallelen Achsen aufsetzbaren Deckeln lässt sich die erfindungsgemäße Antriebseinheit besonders einfach und kostengünstig montieren. Ferner kann insgesamt eine hohe Gehäusefestigkeit erzlelt werden, was sich günstig auf das Schwingungsverhalten und die Akustik auswirkt.

Gemäß einer weiteren bevorzugten Ausführungsform ist eine Motorwelle des Antriebsmotors oder eine hiermit verbundene Antriebswelle über einen Konstanten-Radsatz mit einer Zwischenwelle des Wechselgetriebes verbunden.

Durch diese Maßnahme ist es möglich, einen schnell laufenden elektrischen Antriebsmotor zu verwenden, so dass sich insgesamt eine kompakte Bauform ergeben kann.

Gemäß einer bevorzugten Ausführungsform ist die Übersetzung des Konstanten-Radsatzes im Bereich von 1:3 bis 1:7, vorzugsweise im Bereich von 1:4 bis 1:6 liegt.

Bei einer solchen Übersetzung ist es möglich, einen besonders schnell laufenden elektrischen Antriebsmotor zu verwenden.

Von Vorteil ist es, wenn der Konstanten-Radsatz ein Antriebsritzel aufweist, das an der Motorwelle oder der Antriebswelle festgelegt ist, die mit der Motorwelle verbunden ist.

Ferner ist es vorteilhaft, wenn das Antriebsritzel mittels eines ersten und eines zweiten Lagers gelagert ist, die vorzugsweise unmittelbar benachbart auf der einen bzw. anderen Seite des Antriebsritzels angeordnet sind.

Hierdurch ist es möglich, das Antriebsritzel stabil zu lagern. Von Bedeutung ist dabei auch, dass das Antriebsritzel in axialer Richtung stabil gelagert wird, um aufgrund der üblicherweise verwendeten Schrägverzahnung des Konstanten-Radsatzes keine Axialkräfte in die Motorwelle des elektrischen Antriebsmotors zu leiten. Ebenso gelangen keine elektrisch erzeugten Axialkräfte vom Motor in das Getriebe.

Gemäß einer bevorzugten Ausführungsform ist eine Motorwelle des Antriebsmotors oder eine hiermit verbundene Antriebswelle über einen Konstanten-Radsatz mit einer Zwischenwelle des Wechselgetriebes verbunden ist, und wenn Gang-Radsätze für Gangstufen des Wechselgetriebes und/oder das Ausgleichsgetriebe in axialer Richtung zwischen dem Antriebsmotor und dem Konstanten-Radsatz angeordnet sind.

Bei dieser Ausführungsform kann in axialer Richtung eine kompakte Bauweise realisiert werden: Ferner ist es möglich, die sich zwischen dem Antriebsmotor und dem Konstanten-Radsatz erstreckende Welle vergleichsweise dünn auszubilden. Hierdurch kann diese Welle mit einer gewissen Elastizität ausgebildet werden, wodurch sie als eine Art "Feder" bzw. "Dämpfer" eingerichtet werden kann.

Dies gilt natürlich insbesondere dann, wenn ein hoch dynamischer elektrischer Antriebsmotor verwendet wird.

Vorteilhaft ist es hierbei ferner, wenn der Konstanten-Radsatz benachbart zu dem zweiten Deckel angeordnet ist, der den Getrieberaum verschließt.

Durch diese Maßnahme können beispielsweise Lager zum Lagern der Zahnräder des Konstanten-Radsatzes auf einer Seite an dem zweiten Deckel gelagert werden. Insgesamt kann so eine sehr kostengünstige Montage erzielt werden.

Insgesamt ist es auch vorteilhaft, wenn das Wechselgetriebe einen ersten und einen zweiten Gang-Radsatz aufweist, die jeweils ein mit einem Eingangsglied eines Ausgleichsgetriebes drehfest verbundenes Festrad aufweisen.

Es hat sich gezeigt, dass ein Wechselgetriebe mit zwei Gangstufen für viele Anwendungsfälle hinreichend ist, insbesondere für Elektrofahrzeuge.

Hierbei ist auch vorteilhaft, wenn das Wechselgetriebe einen ersten und einen zweiten Gang-Radsatz aufweist, die jeweils ein Losrad aufweisen, wobei die Losräder an einer Getriebewelle (vorzugsweise der Zwischenwelle) gelagert sind und jeweils mittels einer Schaltkupplung mit der Getriebewelle verbindbar sind.

Ferner ist es insgesamt vorteilhaft, wenn der erste und der zweite Gang-Radsatz in axialer Richtung zwischen dem Antriebsmotor und dem Konstanten-Radsatz angeordnet sind.

Gemäß einer bevorzugten Ausführungsform weist der erste Gang-Radsatz eine Übersetzung im Bereich von 1:2 bis 1:6, vorzugsweise im Bereich von 1:3 bis 1:5 auf.

Ferner weist der zweite Gang-Radsatz vorzugsweise eine Übersetzung im Bereich von 1:2 bis 1:4,5, vorzugsweise im Bereich von 1:2,5 bis 1:4 auf.

In Verbindung mit der bevorzugten Übersetzung des Konstanten-Radsatzes können damit große Übersetzungen von beispielsweise 1:20 realisiert werden, so dass besonders schnell laufende elektrische Antriebsmotoren verwendbar sind.

Ausführungsbeispiele der Erfindung sind in der Zeichnung dargestellt und werden in der nachfolgenden Beschreibung näher erläutert. Es zeigen:
- Fig. 1: eine schematische Darstellung einer ersten Ausführungsform einer Antriebseinheit;
- Fig. 2: eine schematische Längsschnittansicht durch eine Parksperreneinrichtung für eine Antriebseinheit;
- Fig. 3: eine schematische Querschnittsansicht entlang der Linie III-III in Fig. 2;
- Fig. 4: eine Längsschnittansicht durch ein Zahnrad eines erfindungsgemäßen Radsatzes; und
- Fig. 5: eine Detailansicht V der Fig. 4.

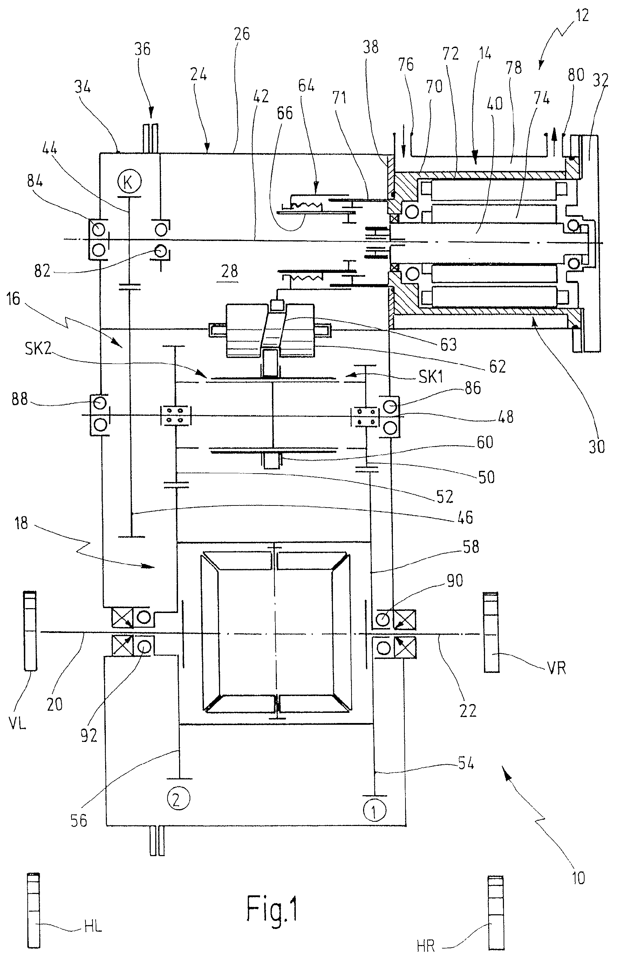

In Fig. 1 ist ein Kraftfahrzeug 10 schematisch dargestellt, das eine angetriebene Vorderachse mit einem linken Vorderrad VL und einem rechten Vorderrad VR sowie eine Hinterachse mit einem linken Hinterrad HL und einem rechten Hinterrad HR aufweist.

In Fig. 1 ist eine erste Ausführungsform einer Antriebseinheit zum Antrieb der Vorderachse generell mit 12 bezeichnet.

Alternativ kann die Antriebseinheit 12 auch zum Antrieb einer Hinterachse ausgelegt sein.

Die Antriebseinheit 12 weist einen elektrischen Antriebsmotor 14, ein Wechselgetriebe 16 und ein Ausgleichsgetriebe 18 auf.

Antriebsleistung wird von dem elektrischen Motor 14 erzeugt und über das Wechselgetriebe 16 auf das Ausgleichsgetriebe 18 geführt. Das Ausgleichsgetriebe 18 verteilt die Antriebsleistung auf eine linke Antriebswelle 20 und eine rechte Antriebswelle 22 der Vorderachse.

Die Antriebseinheit 12 weist ferner ein Gehäuse 24 auf. Das Gehäuse 24 beinhaltet eine aus einem Stück hergestellte Gehäusebasis 26. Die Gehäusebasis 26 beinhaltet einen Motorraum 30 zur Aufnahme des elektrischen Antriebsmotors 14. Der Motorraum 30 ist, in axialer Richtung gesehen, zu einer Seite hin offen, so dass der Antriebsmotor axial in den Motorraum 30 eingesetzt werden kann. Der Motorraum 30 ist mittels eines ersten Deckels 32 verschlossen, so dass der Antriebsmotor 14 gekapselt in dem Motorraum 30 aufgenommen werden kann. Der Einsatz verschiedener Motorvarianten durch einen ein- oder mehrteiligen Adapter (Statorgehäuse 70) ist möglich.

Die Gehäusebasis 26 definiert ferner einen zu dem Motorraum 30 benachbarten Getrieberaum 28, in dem das Wechselgetriebe 16 und das Ausgleichsgetriebe 18 aufgenommen sind. Der Getrieberaum 28 ist zu der anderen axialen Seite hin offen und ist mittels eines zweiten Deckels 34 verschlossen.

Demzufolge können auch das Wechselgetriebe 16 und das Ausgleichsgetriebe 18 durch seitliches Einschieben in den Getrieberaum 28 montiert werden, wobei der zweite Deckel 34 anschließend zur Verkapselung aufgesetzt wird.

Zur Verbindung zwischen der Gehäusebasis 26 und dem zweiten Deckel 34 ist eine Flanschverbindung 36 vorgesehen. Eine entsprechende Flanschverbindung zwischen der Gehäusebasis 26 und dem ersten Deckel 32 ist in Fig. 1 nicht näher bezeichnet. Zwischen dem Motorraum 30 und dem Getrieberaum 28 ist eine Trennwand 38 eingerichtet. Die Trennwand 38 ist einstückig an der Gehäusebasis 26 ausgebildet, oder doch zumindest nach der Art eines Lagerschildes vormontiert darin festgelegt. Die Trennwand 38 wird von einer Motorwelle 40 des elektrischen Antriebsmotors 14 durchsetzt. Etwa im Bereich der Trennwand 38 ist die Motorwelle 40 mit einer koaxial ausgerichteten Antriebswelle 42 verbunden, beispielsweise mittels einer Verzahnung.

Die Motorwelle 40 ist gegenüber der Trennwand 38 bzw. einem weiter unten erläuterten Statorgehäuse mittels einer Wellendichtung abgedichtet. Anders ausgedrückt durchsetzt die Motorwelle 40 (oder die Antriebswelle 42) zwar die Trennwand 38, durch geeignete Dichtungsmittel sind der Getrieberaum 28 und der Motorraum 30 dennoch gegeneinander abgedichtet.

Die Antriebswelle 42 erstreckt sich von dem elektrischen Antriebsmotor 14 in axialer Richtung durch den Getrieberaum 28 bis hin zu dem zweiten Deckel 34.

Unmittelbar benachbart zu dem zweiten Deckel 34 ist ein Konstanten-Radsatz K vorgesehen, der ein Antriebsritzel 44 und ein Konstanten-Rad 46 aufweist. Das Antriebsritzel 44 ist drehfest mit der Antriebswelle 42 verbunden, beispielsweise einstückig hiermit ausgebildet. Das Konstanten-Rad 46 ist drehfest mit einer Zwischenwelle 48 verbunden, die parallel zu der Antriebswelle 42 in dem Getrieberaum 28 gelagert ist.

An der Zwischenwelle 48 sind ein erstes Losrad 50 für eine erste Gangstufe 1 sowie ein zweites Losrad 52 für eine zweite Gangstufe 2 drehbar gelagert. Das erste Losrad 50 steht in Eingriff mit einem ersten Festrad 54. Das zweite Losrad 52 steht in Eingriff mit einem zweiten Festrad 56. Die Festräder 54, 56 sind drehfest mit einem Differentialkorb 58, d.h. einem Eingangsglied des Ausgleichsgetriebes 18, drehfest verbunden.

Antriebsleistung von dem elektrischen Antriebsmotor 14 wird somit von der Motorwelle 40 über die Antriebswelle 42, den Konstanten-Radsatz K, die Zwischenwelle 48 sowie einen der Radsätze 50, 54 bzw. 52, 56 auf den Differentialkorb 58 geleitet. Das Ausgleichsgetriebe 18 verteilt die Antriebsleistung dann in an sich bekannter Weise auf die zwei Antriebswellen 20, 22.

Zur Betätigung der zwei Gangstufen 1, 2 ist eine Aktuatoranordnung vorgesehen, die eine Schaltwalze 62 aufweist. Die Schaltwalze 62 ist um eine Achse drehbar in dem Getrieberaum 28 gelagert, die parallel zu den Wellen 42, 48 ausgerichtet ist. Mittels der Schaltwalze 62 wird eine Schaltmuffe 60 betätigt, die eine erste Schaltkupplung SK1 in Form einer Klauenkupplung oder alternativ eine zweite Schaltkupplung SK2 in Form einer Klauenkupplung betätigt. Die erste Schaltkupplung SK1 dient zum Verbinden des ersten Losrades 50 mit der Zwischenwelle 48. In entsprechender Weise dient die zweite Schaltkupplung SK2 zum drehfesten Verbinden des zweiten Losrades 52 mit der Zwischenwelle 48. In einer Neutralposition (in Fig. 1 dargestellt) ist keine der zwei Schaltkupplungen SK1, SK2 geschlossen.

An der Schaltwalze 62 ist eine Umfangsspur 63 (beispielsweise eine Umfangsnut 63) vorgesehen, in der ein nicht näher bezeichneter Gleitstein geführt ist, der die Schaltmuffe 60 betätigt.

In Fig. 1 ist bei 64 ferner eine Parksperreneinrichtung gezeigt.

Die Parksperreneinrichtung 64 ist antriebsseitig angeordnet, d.h. im Bereich von Motorwelle 40 bzw. Antriebswelle 42.

Die Parksperreneinrichtung 64 ist als im Wesentlichen koaxiales Bauteil zu diesen Wellen 40, 42 vorgesehen und weist eine Sperrmuffe 66 auf, die zwischen einer - in Fig. 1 gezeigten - Freigabeposition und einer Sperrposition axial verschieblich gelagert ist.

Die Sperrmuffe 66 weist eine in Fig. 1 nicht näher bezeichnete Außenverzahnung auf, die in Eingriff steht mit einer Innenverzahnung eines durch die Trennwand 38 hindurch verlaufenden Hülsenfortsatzes 71 eines Statorgehäuses 70 eines Stators 72 des elektrischen Antriebsmotors 14.

Das radial außen liegende Statorgehäuse 70 des Antriebsmotors 14 erstreckt sich mit seinem Hülsenfortsatz 71 durch die Trennwand 38 hindurch und ist radial außenseitig gegenüber der Trennwand 38 abgedichtet. Radial innenseitig ist zwischen dem Hülsenfortsatz 71 und der Motorwelle 40 eine Wellendichtung vorgesehen, so dass der Getrieberaum 28 gegenüber dem Motorraum 30 abgedichtet ist.

An der Motorwelle 40 ist, im Bereich der Verbindung mit der Antriebswelle 42, ein Außenverzahnungsabschnitt vorgesehen, der in der Sperrposition der Sperrmuffe 66 mit der Innenverzahnung der Sperrmuffe 66 in Eingriff steht. In Fig. 1 ist jedoch gezeigt, dass die Innenverzahnung der Sperrmuffe 66 mit diesem Außenverzahnungsabschnitt nicht in Eingriff steht.

Die Sperrmuffe 66 ist mittels der gleichen Aktuatoranordnung betätigbar wie die Schaltkupplungen SK2, SK1. In dem vorliegenden Fall ist es sogar so, dass ein Gleitstein, der mit der Sperrmuffe 66 in Verbindung steht, in der gleichen Umfangsspur 63 geführt ist wie der Gleitstein, der die Schaltkupplungen SK1, SK2 betätigt.

Insgesamt ergibt sich so ein hochkompakter Aufbau mit wenig Aktuatorik.

In Fig. 1 ist radial innerhalb des Stators 72 ferner ein Rotor 74 des elektrischen Antriebsmotors 14 gezeigt, der drehfest mit der Motorwelle 40 verbunden ist.

Die Motorwelle 40 ist zum einen benachbart zu der Trennwand 38 mittels eines Lagers gelagert, das an dem Statorgehäuse 70 festgelegt ist.

Am anderen axialen Ende ist die Motorwelle 40 mittels des ersten Deckels 32 gelagert.

Der elektrische Antriebsmotor 14 lässt sich daher auf einfache Weise montieren, nämlich indem er axial in den Motorraum 30 eingeschoben wird und anschließend der erste Deckel 32 aufgesetzt wird, um den Antriebsmotor 14 darin zu fixieren und zu lagern.

In dem Motorraum 30 ist radial um das Statorgehäuse 70 herum ein Kühlwasserkanal 78 ausgebildet, der über einen Kühlwasseranschluss 76 gespeist wird. Bei 80 ist ferner ein Kühlwasserauslass gezeigt, über den das - erwärmte - Kühlwasser abgeführt wird.

Die mit der Motorwelle 40 verbundene, vorzugsweise gegenüber dieser leicht axial beweglich gelagerte Antriebswelle 42 ist mittels eines ersten Antriebswellenlagers 82 und eines zweiten Antriebswellenlagers 84 gelagert, die unmittelbar benachbart auf gegenüberliegenden Seiten des Antriebsritzels 44 des Konstanten-Radsatzes K angeordnet sind. Das erste Antriebswellenlager 82 ist dabei an der Gehäusebasis 26 festgelegt. Das zweite Antriebswellenlager 84 ist an dem zweiten Deckel 34 festgelegt.

Die Zwischenwelle 48 ist mittels eines ersten Getriebewellenlagers 86 und eines zweiten Getriebewellenlagers 88 gelagert. Das erste Getriebewellenlager 86 ist an der Gehäusebasis 26 festgelegt. Das zweite Getriebewellenlager 88 ist an dem zweiten Deckel 34 festgelegt.

In entsprechender Weise ist das Ausgleichsgetriebe 18 mittels eines ersten Abtriebswellenlagers 90 und eines zweiten Abtriebswellenlagers 92 gelagert, wobei das erste Abtriebswellenlager 90 an der Gehäusebasis 26 festgelegt ist, und wobei das zweite Abtriebswellenlager 92 an dem zweiten Deckel 34 festgelegt ist.

Im Bereich des Austritts der Abtriebswellen 20, 22 aus der Gehäusebasis 26 und dem Deckel 34 sind ferner nicht näher bezeichnete Wellendichtungen vorgesehen.

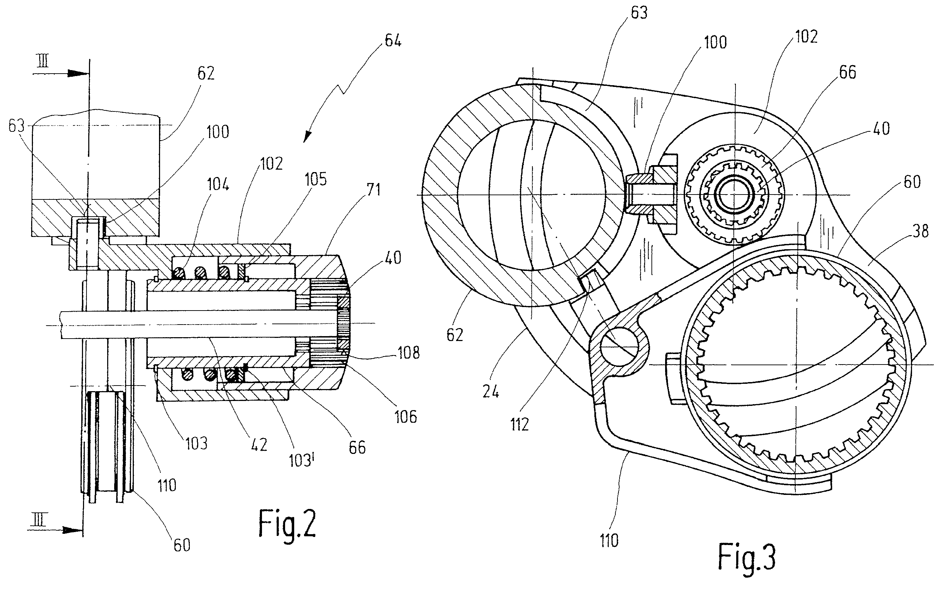

In den Fig. 2 und 3 ist in schematischer Form ein konstruktives Ausführungsbeispiel der Parksperreneinrichtung 64 dargestellt. Gleiche Elemente sind mit gleichen Bezugsziffern versehen.

Man erkennt, dass in der Umfangsspur (Umfangsnut) 63 der Schaltwalze 62 ein Gleitstein 100 geführt ist, der fest mit einer Schiebemuffe 102 verbunden ist.

Die Schiebemuffe 102 ist an ihrem zu der Motorwelle 40 weisenden Ende mit einer Ausnehmung versehen und ist auf den Hülsenfortsatz 71 des Statorgehäuses 70 aufgesteckt. Die Schiebemuffe 102 wird hierdurch in axialer Richtung an dem Hülsenfortsatz 71 geführt.

Die Sperrmuffe 66 ist innerhalb der Ausnehmung der Schiebemuffe 102 gelagert. Genauer gesagt ist die Sperrmuffe 66 an ihrem hinteren, von der Motorwelle 40 weg weisenden Ende außenumfänglich mit einem Sprengring 103 versehen. Die Sperrmuffe 66 durchsetzt verdrehfest eine axiale Durchgangsbohrung der Schiebemuffe 102, wobei der Sprengring 103 auf der der Motorwelle 40 abgewandten Außenseite der Schiebemuffe 102 anliegt. Im Inneren der Ausnehmung der Schiebemuffe 102 ist an dem Außenumfang der Sperrmuffe 66 eine Stützscheibe 105 festgelegt, die mittels eines weiteren Sprengringes 103' axial gehalten wird. Eine Druckfeder 104 ist zwischen der Stützscheibe 105 und dem Boden der Ausnehmung der Schiebemuffe 102 gelagert, und zwar außenumfänglich koaxial zu der Sperrmuffe 66. Die Druckfeder 104 drückt die Sperrmuffe 66 gegenüber der Schiebemuffe 102 in Richtung hin zu der Motorwelle 40 bzw. spannt die Sperrmuffe 66 in diese Richtung vor.

Die Sperrmuffe 66 ist an ihrem zu der Motorwelle 40 hin weisenden Ende mit einer Außenverzahnung (in Fig. 2 nicht näher bezeichnet) ausgebildet, die in einer Innenverzahnung 106 des Hülsenfortsatzes 71 geführt ist. Ferner ist die Sperrmuffe 66 als Hohlmuffe ausgebildet, die von der Antriebswelle 42 durchsetzt wird bzw. koaxial zu dieser angeordnet ist. In ihrem vorderen Bereich, also zu der Motorwelle 40 hin weisend, ist die Sperrmuffe 66 ferner mit einer axialen Innenverzahnung (nicht näher bezeichnet) ausgestattet.

In der in Fig. 2 gezeigten Position ist der Innenverzahnungsabschnitt der Sperrmuffe 66 beabstandet von einem Außenverzahnungsabschnitt 108, der an der Motorwelle 40 vorgesehen ist.

Man erkennt in Fig. 2 ferner, dass die Antriebswelle 42 an ihrem mit der Motorwelle 40 verbundenen Ende mit einer Außenverzahnung versehen ist, die in eine Innenverzahnung der Motorwelle 40 greift, und zwar zur drehfesten Verbindung hiermit.

Bei Betätigung der Parksperreneinrichtung 64 von der in Fig. 2 gezeigten Freigabeposition in die Sperrposition wird die Schaltwalze 62 verdreht. Mittels des Gleitsteines 100 wird die Schiebemuffe 102 versetzt, und zwar in Richtung hin zu der Motorwelle 40. Die Sperrmuffe 66 wird dabei mitgenommen.

Sobald der Innenverzahnungsabschnitt der Sperrmuffe 66 axial an den Außenverzahnungsabschnitt 108 der Motorwelle 40 gelangt, spuren die Verzahnungen ineinander ein. Hierdurch wird eine drehfeste Verbindung zwischen der Motorwelle 40 und dem gehäusefesten Statorgehäuse 70 eingerichtet. Ferner ist, was in Fig. 2 nicht dargestellt ist, in dieser Position die Schaltkupplung SK1 betätigt, so dass die Antriebswellen 20, 22 über die Verzahnungen der diversen Radsätze formschlüssig mit der Motorwelle 40 verbunden sind.

In Fig. 3 ist gezeigt, dass in die gleiche Umfangsnut 63 ein zweiter Gleitstein 112 eingreift, der mit einer Schaltgabel 110 verbunden ist, die dazu eingerichtet ist, die Schaltmuffe 60 zum Betätigen der Schaltkupplungen SK1, SK2 zu verschieben.

Die Innenverzahnung der Sperrmuffe 66 und/oder die Außenverzahnung 108 der Motorwelle 40 sind an ihren aufeinander zu weisenden Enden mit einer Anspitzung versehen, um ein Einspuren zu erleichtern. Ferner wird ab einer gewissen Relativdrehzahl durch die Anspitzung(en) das "Abweisen" der Sperrmuffe 66 durch die Außenverzahnung 108 erreicht.

Nichtsdestotrotz kann es aufgrund der Relativstellung zwischen der Motorwelle 40 und der Sperrmuffe 66 zum Zeitpunkt des Betätigens der Parksperreneinrichtung 64 dazu kommen, dass ein Einspuren nicht möglich ist. In diesem Fall wird bei fortgesetzter Betätigung der Schaltwalze 62 die Druckfeder 104 komprimiert. In diesem Zustand speichert die Druckfeder 104 Energie, und sobald - beispielsweise bei einem Wegrollen des Fahrzeugs - sich die Motorwelle 40 relativ zu der Sperrmuffe 66 verdreht, drückt die in der Druckfeder 104 gespeicherte Energie die Sperrmuffe 66 auf die Außenverzahnung 108 der Motorwelle 40, um so die Sperrposition einzurichten.

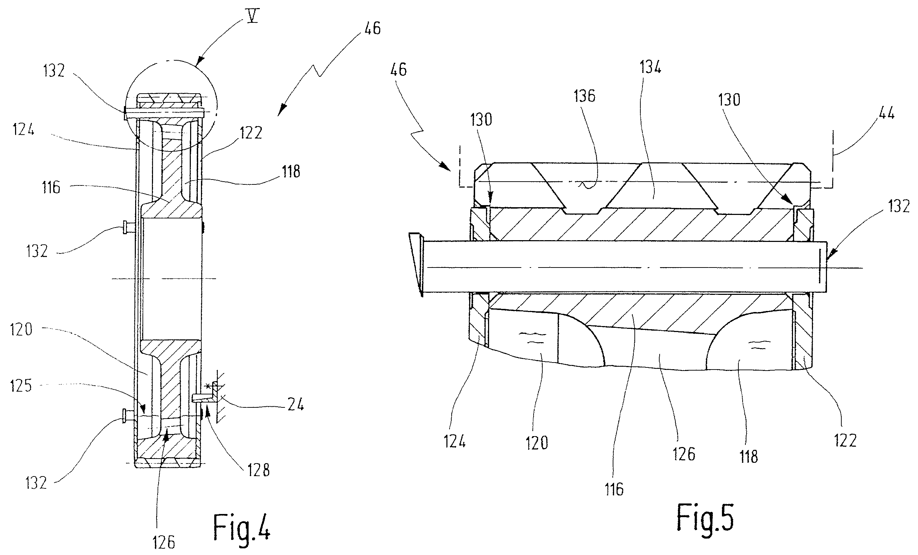

In den Fig. 4 und 5 ist ein Zahnrad, genauer gesagt das Konstanten-Rad 46 des Konstanten-Radsatzes K der Antriebseinheit 12, gezeigt. Die in Bezug auf die in den Fig. 4 und 5 gezeigten Zahnräder erläuterten Merkmale sind jedoch auf jede andere Zahnradpaarung in gleichem Maße anwendbar.

Das Konstanten-Rad 46 weist einen Radkörper 116 auf, der im Bereich zwischen seiner Nabe und der radial außen liegenden Verzahnung auf der einen Seite mit einer ersten Axialausnehmung 118 und auf der axial gegenüberliegenden Seite mit einer zweiten Axialausnehmung 120 ausgebildet ist.

Auf die axiale Seite des Radkörpers 116, bei der die ringförmige Axialausnehmung 118 ausgebildet ist, ist eine erste Spritzscheibe 122 aufgesetzt, die beispielsweise als Ringscheibe ausgebildet sein kann und einen Abschnitt der ersten Axialausnehmung 118 abdeckt. Genauer gesagt bedeckt die erste Spritzscheibe 122 lediglich einen radial außen liegenden Abschnitt der ersten Axialausnehmung 118 und begrenzt dort einen radial außen liegenden Ringraum (nicht näher bezeichnet).

In entsprechender Weise ist auf die zweite Axialausnehmung 120, die ebenfalls als Ringausnehmung ausgebildet ist, eine zweite Spritzscheibe 124 aufgesetzt, die als Ringscheibe ausgebildet ist und einen radial außenliegenden Ringraum bzw. eine radial außenliegende Ringtasche definiert.

Sofern Öl in die Ausnehmungen 118, 120 gelangt, wird dieses im Betrieb aufgrund von Zentrifugalkräften radial nach außen geleitet und staut sich dort auf, was in Fig. 4 schematisch durch ein Stauniveau 125 angedeutet ist.

Der Radkörper 116 ist ferner mit einer Mehrzahl von axialen Durchbrechungen (Verbindungskanälen) 126 versehen, die zwischen der Ringtasche 118 und der Ringtasche der Ausnehmung 120 verlaufen und eine Fluidverbindung hierzwischen einrichten.

Ferner ist in Fig. 4 gezeigt, dass an dem Gehäuse 24 ein Ölleitelement 128 vorgesehen sein kann, das von oben herunterströmendes Fluid auffängt und in axialer Richtung in die erste Axialausnehmung 118 leitet.

Mit anderen Worten wird aufgrund des Ölleitelements 128 gezielt Fluid in die Axialausnehmung 118 geleitet, so dass dieses sich im Betrieb in der Ringtasche aufstaut. Durch die Verbindungskanäle 126 bildet sich ein entsprechendes Fluidniveau auch in der gegenüberliegenden Ringtasche der Axialausnehmung 120 aus.

Die zwei Spritzscheiben 122, 124 sind mittels einer Mehrzahl von Zapfen 132 an dem Radkörper 116 festgelegt. Die Zapfen sind insbesondere vernietet, wobei eine flächige Anlage der Spritzscheiben 122, 124 an dem radial außen liegenden Abschnitt des Radkörpers 116 gewollterweise nicht fluiddicht ist.

Durch diese Verbindungsflächen wird folglich ein Fluidspalt 130 eingerichtet, wie es in Fig. 5 zu sehen ist. Das in den Ringtaschen aufgrund von Zentrifugalkräften befindliche Fluid wird über die Ringspalte 130 radial nach außen gedrückt und tritt im Bereich der Verzahnung 134 des Konstanten-Rades 46 aus.

Die Verzahnung 136 des damit in Eingriff stehenden Antriebsritzels 44 ist breiter (besitzt eine größere Zahnbreite) als die Verzahnung 134. Demzufolge wird das über die Ringspalte 130 radial ausströmende Fluid unmittelbar in den Eingriffsbereich der Verzahnungen 134, 136 geführt, so dass eine gute Schmierung bzw. Kühlung gewährleistet ist.

## Patentansprüche

1. Antriebseinheit (12) für ein Kraftfahrzeug mit einem Radsatz (K; 44, 46) und einem Gehäuse (24), wobei der Radsatz (K; 44, 46) ein erstes, vorzugsweise antreibendes Zahnrad (44) und ein zweites Zahnrad (46) aufweist, das in axialer Richtung schmaler ausgebildet ist als das erste Zahnrad (44), und wobei das zweite Zahnrad (46) an wenigstens einer axialen Außenseite eine Ausnehmung (118, 120) aufweist, die innenumfänglich eine Ringtasche zur Aufnahme von Schmier- bzw. Kühlfluid aufweist, und wobei sich von der Ringtasche wenigstens ein Schmierkanal (130) radial nach außen erstreckt, durch den hindurch während des Betriebs Schmier- bzw. Kühlfluid auf die Verzahnung des ersten Zahnrads (44) strömt, **dadurch gekennzeichnet, dass** der Radsatz (44, 46) benachbart zu dem Gehäuse (24) der Antriebseinheit (12) gelagert ist und dass an dem Gehäuse (24) ein Fluidleitelement (128) angeordnet ist, wobei das Fluidleitelement (128) unterhalb einer Welle (48) angeordnet ist, an der das zweite Zahnrad (46) gelagert ist, und in die Ausnehmung (118, 120) hineinragt, wobei das Fluidleitelement (128) dazu ausgebildet ist, von oben herunterströmendes Fluid aufzufangen und in axialer Richtung in die Ausnehmung (118, 120) zu leiten.

2. Antriebseinheit nach Anspruch 1, **dadurch gekennzeichnet, dass** an der axialen Außenseite des zweiten Zahnrades (46) eine Ringscheibe (122, 124) befestigt ist, die die Ringtasche axial begrenzt, und wobei zwischen der Ringscheibe (122, 124) und der axialen Außenseite ein Ringspalt (130) eingerichtet ist, der den Schmierkanal (130) bildet.

3. Antriebseinheit nach Anspruch 1 oder 2, **dadurch gekennzeichnet, dass** die Ringscheibe (122, 124) unlösbar mit einem Radkörper (116) des zweiten Zahnrades (46) verbunden ist, vorzugsweise durch ein oder mehrere Form- oder Stoffschlusselemente wie einen oder mehrere genietete Zapfen (132).

4. Antriebseinheit nach einem der Ansprüche 1 bis 3, **dadurch gekennzeichnet, dass** auf beiden axialen Außenseiten des zweiten Zahnrades (46) eine Ringtasche gebildet ist und dass die Ringtaschen durch wenigstens einen axialen Verbindungskanal (126) miteinander in Verbindung stehen.

5. Antriebseinheit (12) nach einem der Ansprüche 1 bis 4, mit einem elektrischen Antriebsmotor (14) und einem Wechselgetriebe (16) mit wenigstens zwei Gangstufen (1, 2), wobei der Antriebsmotor (14) und das Wechselgetriebe (16) in dem gemeinsamen Gehäuse (24) aufgenommen sind.

6. Antriebseinheit nach Anspruch 5, **dadurch gekennzeichnet, dass** eine Motorwelle (40) des Antriebsmotors (14) oder eine hiermit verbundene Antriebswelle (42) über den Radsatz (K) mit der, einer Zwischenwelle (48) des Wechselgetriebes (16) bildende, Welle (48) verbunden ist.

7. Antriebseinheit nach einem der Ansprüche 1 bis 6, mit einem elektrischen Antriebsmotor (14) und einem Wechselgetriebe (16) mit wenigstens zwei Gangstufen (1, 2), **dadurch gekennzeichnet, dass** eine Motorwelle (40) des Antriebsmotors (14) oder eine hiermit verbundene Antriebswelle (42) über den Radsatz (K) mit der, einer Zwischenwelle (48) des Wechselgetriebes (16) bildende, Welle (48) verbunden ist und dass die Übersetzung des Konstanten-Radsatzes (K) im Bereich von 1:3 bis 1:7, vorzugsweise im Bereich von 1:4 bis 1:6 liegt.

8. Antriebseinheit nach Anspruch 6 oder 7, **dadurch gekennzeichnet, dass** das erste Zahnrad (44) des Radsatzes (K) ein Antriebsritzel (44) bildet, das an der Motorwelle (40) oder der Antriebswelle (42) festgelegt ist, die mit der Motorwelle (40) verbunden ist.

9. Antriebseinheit nach einem der Ansprüche 1 bis 8, mit einem elektrischen Antriebsmotor (14) und einem Wechselgetriebe (16) mit wenigstens zwei Gangstufen (1, 2), **dadurch gekennzeichnet, dass** eine Motorwelle (40) des Antriebsmotors (14) oder eine hiermit verbundene Antriebswelle (42) über den Radsatz (K) mit der, einer Zwischenwelle (48) des Wechselgetriebes (16) bildende, Welle (48) verbunden ist und dass Gang-Radsätze (50, 54; 52, 56) für Gangstufen (1, 2) des Wechselgetriebes (16) und/oder ein Ausgleichsgetriebe (18) in axialer Richtung zwischen dem Antriebsmotor (14) und dem Konstanten-Radsatz (K) angeordnet ist.

10. Antriebseinheit nach Anspruch 9, dadurch gekenntzeichnet, dass eine Gehäusebasis (26) einen an einer Seite offenen, mittels eines ersten Deckels (32) verschlossenen Motorraum (30) zur Aufnahme des Antriebsmotors (14) sowie einen Getrieberaum (28) zur Aufnahme des Wechselgetriebes (16) sowie gegebenenfalls des Ausgleichsgetriebes (18) aufweist, wobei der Getrieberaum (28) an der anderen Seite der Gehäusebasis (26) offen und mittels eines zweiten Deckels (34) verschlossenen ist, wobei der Radsatz (K) benachbart zu dem zweiten Deckel (34) angeordnet ist, der den Getrieberaum (28) verschließt.

11. Antriebseinheit nach einem der Ansprüche 1 bis 10, mit einem elektrischen Antriebsmotor (14) und einem Wechselgetriebe (16) mit wenigstens zwei Gangstufen (1, 2), **dadurch gekennzeichnet, dass** eine Parksperreneinrichtung (64) an einer Motorwelle (40) des Antriebsmotors (14) oder an einer hiermit drehfest verbundenen Antriebswelle (42) angreift.

12. Antriebseinheit nach Anspruch 11, **dadurch gekennzeichnet, dass** die Parksperreneinrichtung (64) mittels einer elektromotorischen Aktuatoreinrichtung (62) betätigbar ist, wobei vorzugsweise eine Motorwelle (40) des Antriebsmotors (14) oder eine hiermit verbundene Antriebswelle (42) über den Konstanten-Radsatz (K) mit der, einer Zwischenwelle (48) bildende, Welle (48) verbunden ist und dass die Aktuatoranordnung (62) in axialer Richtung zumindest teilweise, vorzugsweise vollständig zwischen dem Antriebsmotor (14) und dem Konstanten-Radsatz (K) angeordnet ist.

13. Antriebseinheit nach Anspruch 11 oder 12, **dadurch gekennzeichnet, dass** eine Motorwelle (40) des Antriebsmotors (14) oder eine hiermit verbundene Antriebswelle (42) über den Konstanten-Radsatz (K) mit der, einer Zwischenwelle (48) bildende, Welle (48) verbunden ist und dass die Parksperreneinrichtung (64) in axialer Richtung zwischen dem Antriebsmotor (14) und dem Konstanten-Radsatz (K) angeordnet ist.

## Claims

1. Drive unit (12) for a motor vehicle, having a gear set (K; 44, 46) and a housing (24), wherein the gear set (K; 44, 46) has a first, preferably driving gearwheel (44) and a second gearwheel (46) which is designed to be narrower in an axial direction than the first gearwheel (44), and wherein the second gearwheel (46) has, on at least an axial outer side, a recess (118, 120) which, at the inner circumference, has a ring-shapad pocket for receiving lubricating and/or cooling fluid, and wherein at least one lubricating duct (130) extends radially outward from the ring-shaped pocket, through which lubricating duct lubricating and/or cooling fluid flows onto the toothing of the first gearwheel (44) during operation, **characterized in that** the gear set (44, 46) is mounted adjacent to the housing (24) of the drive unit (12), and **in that** a fluid-guiding element (128) is arranged on the housing (24), wherein the fluid-guiding element (128) is arranged below a shaft (48) on which the second gearwheel (46) is mounted, and said fluid-guiding element projects into the recess (118, 120), wherein the fluid-guiding element (128) is designed to capture fluid flowing down from above and conduct said fluid into the recess (118, 120) in an axial direction.

2. Drive unit according to Claim 1, **characterized in that** a ring-shaped disc (122, 124) is fastened to the axial outer side of the second gearwheel (46), which ring-shaped disc axially delimits the ring-shaped pocket, and wherein, between the ring-shaped disc (122, 124) and the axial outer side, there is formed a ring-shaped gap (130) which forms the lubricating duct (130).

3. Drive unit according to Claim 1 or 2, **characterized in that** the ring-shaped disc (122, 124) is connected non-detachably to a wheel body (116) of the second gearwheel (46), preferably by way of one or more pasitively locking or cohesive elements, such as one or more riveted pins (132).

4. Drive unit according to one of Claims 1 to 3, **characterized in that** a ring-shaped pocket is formed on both axial outer sides of the second gearwheel (46), and **in that** the ring-shaped pockets are connected to one another by way of at least one axial connecting duct (126).

5. Drive unit (12) according to one of Claims 1 to 4, having an electric drive motor (14) and having a variable-speed transmission (16) with at least two gear stages (1, 2), wherein the drive motor (14) and the variable-speed transmission (16) are accommodated in the common housing (24).

6. Drive unit according to Claim 5, **characterized in that** a motor shaft (40) of the drive motor (14), or a drive shaft (42) connected to said motor shaft, is connected by way of the gear set (K) to the shaft (48) that forms an intermediate shaft (48) of the variable-speed transmission (16),

7. Drive unit according to one of Claims 1 to 6, having an electric drive motor (14) and having a variable-speed transmission (16) with at least two gear stages (1, 2), **characterized in that** a motor shaft (40) of the drive motor (14), or a drive shaft (42) connected to said motor shaft, is connected by way of the gear set (K) to the shaft (48) that forms an intermediate shaft (48) of the variable-speed transmission (16), and **in that** the transmission ratio of the constant gear set (K) lies in the range from 1:3 to 1:7, preferably in the range from 1:4 to 1:6.

8. Drive unit according to Claim 6 or 7, **characterized in that** the first gearwheel (44) of the gear set (K) forms a drive pinion (44) which is fixed to the motor shaft (40) or to the drive shaft (42) that is connected to the motor shaft (40).

9. Drive unit according to one of Claims 1 to 8, having an electric drive motor (14) and having a variable-speed transmission (16) with at least two gear stages (1, 2), **characterized in that** a motor shaft (40) of the drive motor (14), or a drive shaft (42) connected to said motor shaft, is connected by way of the gear set (K) to the shaft (48) that forms an intermediate shaft (48) of the variable-speed transmission (16), and **in that** gearwheel sets (50, 54; 52, 56) for gear stages (1, 2) of the variable-speed transmission (16) and/or a differential gear (18) is arranged in an axial direction between the drive motor (14) and the constant gear set (K).

10. Drive unit according to Claim 9, **characterized in that** a housing base (26) has a motor chamber (30), which is open on one side and which is closed off by way of a first cover (32) and which serves for accommodating the drive motor (14), and a transmission chamber (28) for accommodating the variable-speed transmission (16) and possibly the differential gear (18), wherein the transmission chamber (28) is open at the other side of the housing base (26) and is closed off by way of a second cover (34), wherein the gear set (K) is arranged adjacent to the second cover (34) that closes off the transmission chamber (28).

11. Drive unit according to one of Claims 1 to 10, having an electric drive motor (14) and having a variable-speed transmission (16) with at least two gear stages (1, 2), **characterized in that** a parking lock device (64) engages on a motor shaft (40) of the drive motor (14) or on a drive shaft (42) that is connected rotationally conjointly to said motor shaft.

12. Drive unit according to Claim 11, **characterized in that** the parking lock device (64) can be actuated by way of an electromotive actuator device (62), wherein preferably, a motor shaft (40) of the drive motor (14), or a drive shaft (42) that is connected to said motor shaft, is connected by way of the constant gear set (K) to the shaft (48) that forms an intermediate shaft (48), and **in that** the actuator device (62) is arranged in an axial direction at least partially, preferably entirely, between the drive motor (14) and the constant gear set (K).

13. Drive unit according to Claim 11 or 12, **characterized in that** a motor shaft (40) of the drive motor (14), or a drive shaft (42) that is connected to said motor shaft, is connected by way of the constant gear set (K) to the shaft (48) that forms an intermediate shaft (48), and **in that** the parking lock device (64) is arranged in an axial direction between the drive motor (14) and the constant gear set (K).

## Revendications

1. Unité d'entraînement (12) pour un véhicule automobile, comprenant un jeu de pignons (K ; 44, 46) et un boîtier (24), le jeu de pignons (K ; 44, 46) présentant un premier pignon, de préférence d'entraînement, (44) et un deuxième pignon (46), qui, en direction axiale, est plus étroit que le premier pignon (44), le deuxième pignon (46) présentant, au niveau d'au moins un côté extérieur axial, un évidement (118, 120) qui présente, du côté de la périphérie interne, une cavité annulaire pour recevoir un fluide de lubrification ou de refroidissement, et au moins un canal de lubrification (130) s'étendant radialement vers l'extérieur depuis la cavité annulaire, à travers lequel, pendant le fonctionnement, du fluide de lubrification ou de refroidissement s'écoule sur la denture du premier pignon (44), **caractérisée en ce que** le jeu de pignons (44, 46) est supporté à côté du boîtier (24) de l'unité d'entraînement (12) et **en ce qu'**un élément de guidage de fluide (128) est disposé au niveau du boîtier (24), l'élément de guidage de fluide (128) étant disposé sous un arbre (48) au niveau duquel est supporté le deuxième pignon (46) et pénétrant dans l'évidement (118, 120), l'élément de guidage de fluide (128) étant réalisé de manière à recueillir le fluide s'écoulant depuis le haut vers le bas et à le diriger dans la direction axiale dans l'évidement (118, 120).

2. Unité d'entraînement selon la revendication 1, **caractérisée en ce qu'**une rondelle annulaire (122, 124) est fixée au niveau du côté extérieur axial du deuxième pignon (46), laquelle limite axialement la cavité annulaire, une fente annulaire (130) étant prévue entre la rondelle annulaire (122, 124) et le côté extérieur axial, laquelle forme le canal de lubrification (130).

3. Unité d'entraînement selon la revendication 1 ou 2, **caractérisée en ce que** la rondelle annulaire (122, 124) est connectée de manière imperdable à un corps de pignon (116) du deuxième pignon (46), de préférence par un ou plusieurs éléments d'engagement par correspondance de formes ou par liaison de matière, comme un ou plusieurs tourillons rivetés (132).

4. Unité d'entraînement selon l'une quelconque des revendications 1 à 3, **caractérisée en ce qu'**une cavité annulaire est formée sur les deux côtés extérieurs axiaux du deuxième pignon (46), et **en ce que** les cavités annulaires sont en liaison mutuelle par au moins un canal de liaison axial (126).

5. Unité d'entraînement (12) selon l'une quelconque des revendications 1 à 4, comprenant un moteur d'entraînement électrique (14) et une boîte de vitesses (16) avec au moins deux rapports de vitesses (1, 2), le moteur d'entraînement (14) et la boîte de vitesses (16) étant reçus dans le boîtier commun (24).

6. Unité d'entraînement selon la revendication 5, **caractérisée en ce qu'**un arbre de moteur (40) du moteur d'entraînement (14) ou un arbre d'entraînement (42) connecté à celui-ci est connecté par le biais du jeu de pignons (K) à l'arbre (48) formant un arbre intermédiaire (48) de la boîte de vitesses (16).

7. Unité d'entraînement selon l'une quelconque des revendications 1 à 6, comprenant un moteur d'entraînement électrique (14) et une boîte de vitesses (16) avec au moins deux rapports de vitesses (1, 2), **caractérisée en ce qu'**un arbre de moteur (40) du moteur d'entraînement (14) ou un arbre d'entraînement (42) connecté à celui-ci est connecté par le biais du jeu de pignons (K) à l'arbre (48) formant un arbre intermédiaire (48) de la boîte de vitesses (16) et **en ce que** le rapport de transmission du jeu de pignons constant (K) est de l'ordre de 1:3 à 1;7, de préférence de l'ordre de 1:4 à 1:6.

8. Unité d'entraînement selon la revendication 6 ou 7, **caractérisée en ce que** le premier pignon (44) du jeu de pignons (K) forme un pignon d'entraînement (44) qui est fixé sur l'arbre de moteur (40) ou sur l'arbre d'entraînement (42) qui est connecté à l'arbre de moteur (40).

9. Unité d'entraînement selon l'une quelconque des revendications 1 à 8, comprenant un moteur d'entraînement électrique (14) et une boîte de vitesses (16) avec au moins deux rapports dru vitesses (1, 2), **caractérisée en ce qu'**un arbre de moteur (40) du moteur d'entraînement (1.4) ou un arbre d'entraînement (42) connecté à celui-ci est connecté par le biais du jeu de pignons (K) à l'arbre (48) formant un arbre intermédiaire (48) de la boîte de vitesses (16) et **en ce que** des jeux de pignons de rapports (50, 54 ; 52, 56) pour des rapports de vitesses (1, 2) de la boîte de vitesses (16) et/ou un différentiel (18) sont disposés dans la direction axiale entre le moteur d'entraînement (14) et le jeu de pignons constant (K).

10. Unité d'entraînement selon la revendication 9, **caractérisée en ce qu'**une base de boîtier (26) présente un compartiment moteur (30) ouvert d'un côté, fermé au moyen d'un premier couvercle (32), pour recevoir le moteur d'entraînement (14) ainsi qu'un espace de transmission (28) pour recevoir la boîte de vitesses (16) et également le cas échéant le différentiel (18), l'espace de transmission (28) étant ouvert de l'autre côté de la base de boîtier (26) et étant fermé au moyen d'un deuxième couvercle (34), le jeu de pignons (K) étant disposé à côté du deuxième couvercle (34) qui ferme l'espace de transmission (28).

11. Unité d'entraînement selon l'une quelconque des revendications 1 à 10, comprenant un moteur d'entraînement électrique (14) et une boîte de vitesses (16) avec au moins deux rapports de vitesses (1, 2), **caractérisée en ce qu'**un dispositif de verrouillage de stationnement (64) vient en prise sur un arbre de moteur (40) du moteur d'entraînement (14) ou sur un arbre d'entraînement (42) connecté de manière solidaire en rotation à celui-ci.

12. Unité d'entraînement selon la revendication 11, **caractérisée en ce que** le dispositif de verrouillage de stationnement (64) peut être actionné au moyen d'un dispositif d'actionneur (62) à moteur électrique, un arbre de moteur (40) du moteur d'entraînement (14) ou un arbre d'entraînement (42) connecté cclui-ci étant de préférence connecté par le biais du jeu de pignons constant (K) à l'arbre (48) formant un arbre intermédiaire (48), et **en ce que** l'agencement d'actionneur (62) est disposé dans la direction axiale au moins en partie, de préférence complètement, entre le moteur d'entraînement (14) et le jeu de pignons constant (K).

13. Unité d'entraînement selon la revendication 1 ou 12, **caractérisée en ce que** qu'un arbre de moteur (40) du moteur d'entraînement (14) ou un arbre d'entraînement (42) connecté à celui-ci est connecté par le biais du jeu de pignons constant (K) à l'arbre (48) formant un arbre intermédiaire (48) et **en ce que** le dispositif de verrouillage de stationnement (64) est disposé dans la direction axiale entre le moteur d'entraînement (14) et le jeu de pignons constant (K).
